# EUROPEAN PATENT APPLICATION

(11) **EP 1 380 392 A2**
(43) Date of publication of application: **14.01.2004**
(21) Application number: 03396072.5
(22) Date of filing: 11.07.2003
(51) Int. Cl.: B25J 5/02, B25J 9/00, B23Q 3/18, B23Q 7/04

(54) **A manufacturing cell, a transfer and manipulating apparatus and a positioning device**

(30) Priority: 12.07.2002 FI 20021380
(71) Applicant: Finn-Power, 62201 Kauhava (FI)
(72) Inventor: Irri, Antero, 35700 Vilppula (FI); Parviainen, Miikka, 35700 Vilppula (FI)
(74) Representative: Hakola, Unto Tapani

(57) **Abstract**

A manufacturing cell for work pieces, comprising automated manipulating means (5) for transfers of a work piece, which are arranged to grip the work piece (7), to place the work piece (7) in a machining device (6) and to deliver the machined work piece (7); transfer means (2) which are arranged to transfer said manipulating means to and from storage locations and the machining device; positioning means (12), wherein said manipulating means are arranged to deliver the work piece (7) to said positioning means for setting the position of the work piece and to grip it again after the setting. The positioning means (12) are, together with the manipulating means (5), placed in said transfer means, or the positioning means (12) are placed in separate transfer means (15), which are arranged to move said positioning means within the reach of the manipulating means (5) at least for the time of said setting. Furthermore, said manipulating means (5), transfer means (2) and positioning means (12) form a transfer and manipulating apparatus for work pieces and for various functions. The positioning device (12) preferably comprises sensor means (17), which are arranged to detect the adherence of several work pieces (7) to each other, one above the other.

## Description

The invention relates to a manufacturing cell for work pieces as set forth in the preamble of claim 1. The invention also relates to a transfer and manipulating apparatus for work pieces as set forth in the preamble of claim 12. The invention further relates to a positioning device for work pieces as set forth in the preamble of claim 16.

In the manufacture of various sheet metal pieces, it is known to use manufacturing cells of various assemblies, consisting, for example, of a robot and an edging press. In the manufacturing cell, a robot is used to manipulate sheets, which are brought to a pressing machine for the operations of bending the sheet. After this, the finished bent piece or the bent sheet is removed by the robot from the pressing machine and is placed back to a conveyor or a pallet.

One manufacturing cell of prior art is disclosed in the published application DE 3407445 A1. It applies a reciprocating robot, which takes the sheet and places it onto an apparatus for positioning and centering the piece. The sheet then goes down against sensors and the bending is started. After the pressing, the robot grips the piece again.

In apparatuses of this kind, the construction of the positioning device for various types of sheets will cause additional costs. Furthermore, the positioning device must be actively controlled, wherein it must also be provided with the necessary power supply or the supply of a pressurized medium for actuators. The operation also requires the provision of sensors and the coordination of the operation with the robot.

Said positioning device can also be placed separately from the pressing machine, in which case, after the positioning, the robot grips the sheet and takes it to the pressing machine. The robot holds to the sheet during the pressing, or grips it again at the end of the pressing, and transfers it again, for example, to a pallet. When the positioning device is placed separately from the pressing machine, it is possible to place it in a desired position and to utilize, for example, gravity to move the sheet to a desired location and a desired position. After this, the robot grips the sheet whose position and location in relation to the robot is now known so that the gripper of the robot would grip the sheet precisely at the desired location and in the desired position, wherein the exact transfer of the sheet to the pressing machine would be possible.

However, the operation is not optimized with respect to the speed of the manufacturing cell, because the robot now delivers the sheet first to the positioning device for some time and first after that takes the sheet to the pressing machine. The movements to the positioning device and further to the pressing machine increase the manufacturing time. Furthermore, the grippings of the sheet are increased, which slows down the operation further. Moreover, it is difficult to place the separate positioning device in the manufacturing cells, which do not have the extra free space required for maintenance and the transfer of goods. Particularly in the manipulation of sheets, one must make sure that several sheets are not attached to each other. The operation of the robot and the manufacturing cell is decelerated further, when extra movements must be made to transfer the sheets to and from a sensor for checking. It is an aim of the present invention to eliminate the above-presented drawbacks relating to the speed of the manufacturing cell. The aim is to provide a manufacturing cell with a minimum drawback caused by a simple, separate positioning device. The aim is particularly to reduce the number of transfer movements required of the robot and to make the positioning of the sheet and the movement of the robot even simultaneous, to improve the efficiency.

The manufacturing cell according to the invention is characterized in what will be presented in the characterizing part of claim 1. The transfer and manipulating apparatus according to the invention is characterized in what will be presented in the characterizing part of claim 12. The positioning device according to the invention is characterized in what will be presented in the characterizing part of claim 16.

The basic principle of the invention is to move the positioning device with the robot when the robot moves from one place to another. In one embodiment, the positioning device is arranged to move along the same path and in phase with the robot, wherein the positioning device can be taken to use when desired. Said positioning device can also serve other movable or immovable robots, if the mutual operation of the robots can be synchronized in a suitable way. In a particularly advantageous embodiment, the positioning device is connected to the robot, its frame or a carriage for transferring the robot back and forth. In this way, a separate carriage will not be needed for transferring the positioning device. Said device can also be easily connected to old, existing movable robots. By arranging the positioning device to operate by the effect of gravity, there will be no need, for example, to supply pressurized air or to provide actuators.

One advantage of the invention is that the positioning device can now be placed in the area in which the robot moves, wherein the additional space required by it is nonexistent or as small as possible. The positioning of the sheet can now be performed during the time when the robot is moving from the storage of sheets to the pressing machine, wherein no separate transfer to the positioning device and further to the pressing machine will be needed. The time saving achieved is significant, even though the positioning of the sheet were only performed when the robot is at rest. In one particular embodiment, the structure is reliable, simple and easily connectable even to existing systems.

Additional advantages are achieved in a preferred embodiment of the invention, in which the sensors for checking for the adherence of several sheets to each other are provided in the positioning device. The operation and placement of the sensors are selected so that the checking takes place simultaneously with the arrival, centering, immobility, or exit of the sheet. The checking takes place, for example, when the robot is moving to grip the sheet, wherein no extra delays are necessary. The advantage is thus that the sheet does not need to be transferred separately to a detecting location or to separate sensors, wherein the robot does not make any extra movements, time is saved and the working cycle becomes faster. Said embodiment of the invention can also be applied in a case in which the positioning device is placed in a stationary position, separate from the moving robot or carriage.

In the robot, the detecting can be impiemented, for example, by using jaw-type means in the way disclosed in JP 11232421 A, or by applying technology utilizing magnetic fields in the gripper of the robot, as disclosed in JP 54153681 A. It is also possible to utilize various methods of prior art, based on optical detection or pattern recognition, to examine the end edge of the sheet and to determine the quantity of the sheets. The detection is based on, for example, a laser or the variation in brightness and shade, wherein it is possible to apply technology according to US 5,017,773, EP 0 743 616 A2, or JP 2001184479. Said techniques can also be combined with the positioning device according to the invention. In one advantageous embodiment, the detection is stationary at the storage location. For example, the total number of sheets in a stack on a pallet is detected by applying said techniques, wherein it is easily determined, how many sheets the robot has removed from the pallet each time.

In the following description, the invention will be illustrated with reference to the appended drawings, in which
- Fig. 1: shows a layout principle of a manufacturing cell in a top view, and
- Fig. 2: shows a transfer and manipulating apparatus seen from the side,
- Fig. 3: shows a positioning device with sensors.

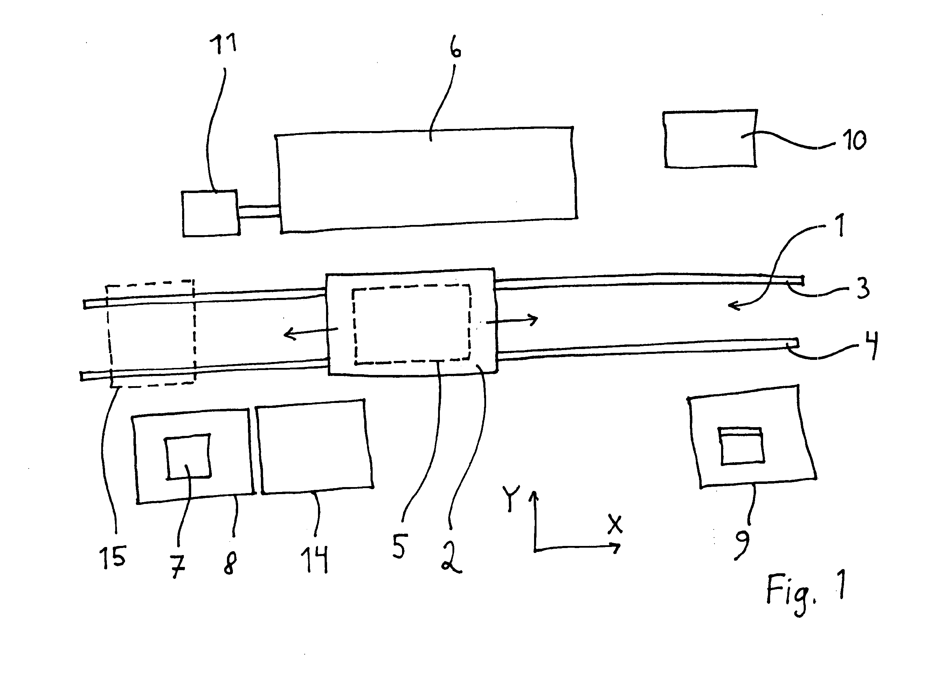

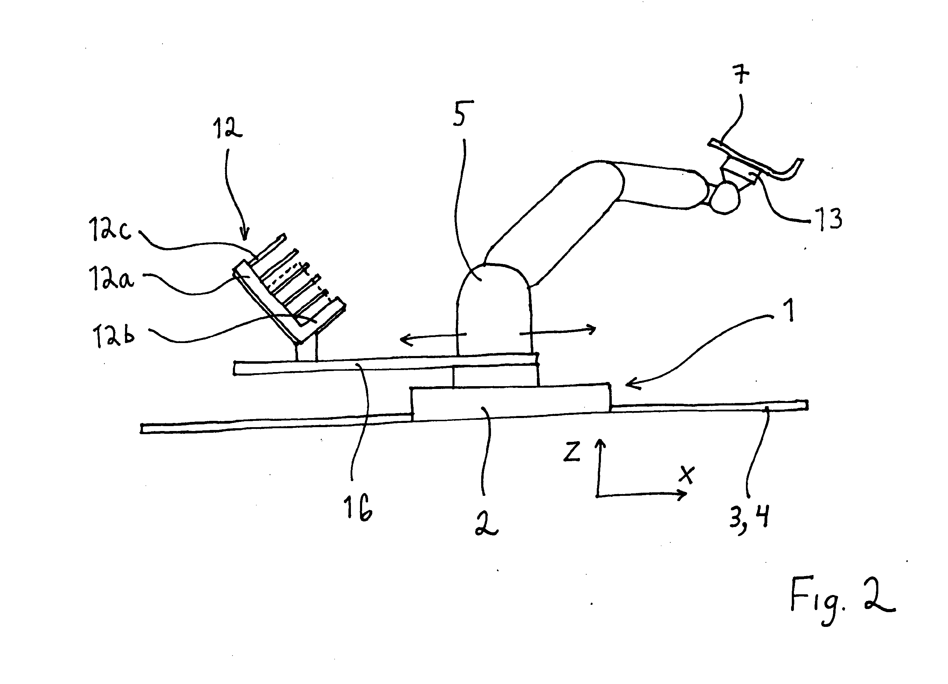

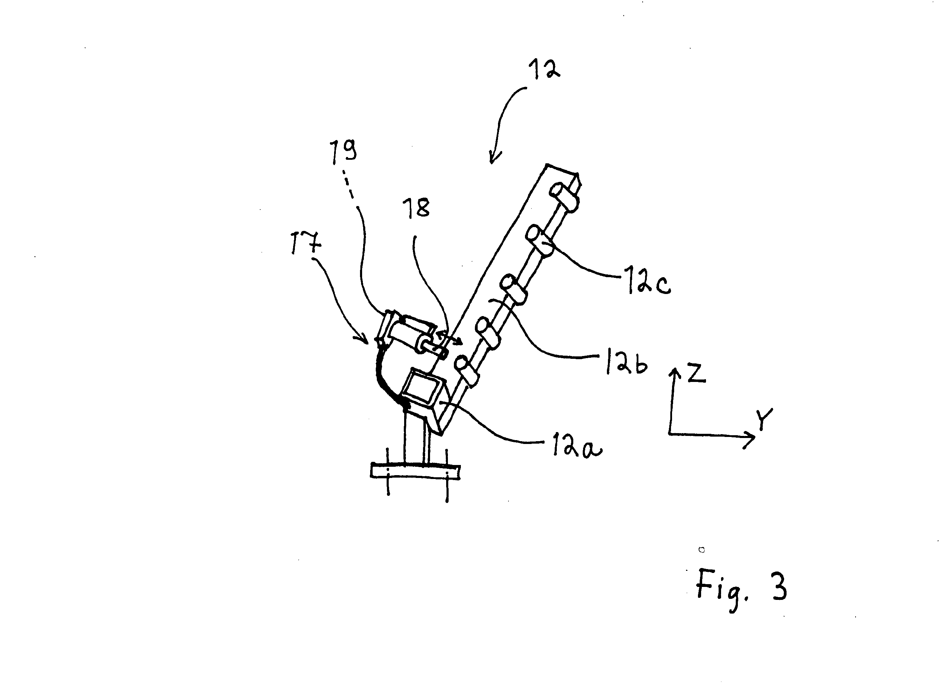

Figure 1 shows the layout principle of devices in a manufacturing cell. The cell comprises means 1 for moving a robot 5. In Fig. 1, the location of placing the robot 5 of Fig. 2 is indicated with a broken line. Said means 1 comprise, for example, a carriage, a transfer device, a moving frame, or a corresponding system. Figure 1 shows a carriage 2, which moves along a predetermined path back and forth, supported by rails 3 and 4. The movement takes place back and forth in the X-direction in Fig. 1. In this case, the X-movement is parallel with the direction of the jaws of a pressing machine 6, wherein the bending of a sheet 7 thus also takes place around this direction, as shown in Fig. 2. The magnitude of the bend is for example 90°, but it may deviate from this. it is possible to make several bends in the same sheet 7, and the function of the robot 5 is also to change the position of the sheet 7 for the pressing machine 6, if necessary. The technical structure of the pressing machine 6 is known as such, comprising an upper jaw and a lower jaw, between which the sheet 7 is pressed and bent in a desired manner. The rails 3, 4 can be replaced with a desired guide or slide arrangement according to prior art to move the carriage 2 at a sufficient speed and accuracy. The carriage 2 is provided with the necessary motor and control means for the moving.

Next to the carriage 2, storage locations are provided for the sheets 7 and the finished pieces. In this case, the storage locations are pallets 8 and 9, which are carried, for example, by means of a forklift, and they may be several in number. Alternatively, various movable platforms may be used. The sheets 7 can also be brought to the robot 5 by a conveyor which is thus used as an intermediate storage and simultaneously as a buffer storage, wherein the robot 5 moves more in the X-direction and picks up the sheet 7 from a given location which is thus used as the storage location. The finished pieces 7 can also be delivered to the same or to a different conveyor to take them away. The conveyors used can be devices of prior art. The cell also comprises means 10 for controlling the robot 5 and means 11 for controlling the edging press 6, the necessary electrical connections, data transmission connections, and the necessary auxiliary devices, which comply with the prior art.

According to Fig. 2, the means 12 for positioning the sheet 7 are arranged in such a way that they move at the same time when the robot 5 moves. The positioning means 12 comprise a support or a positioning jig functioning by the effect of gravity. A straight sheet 7 placed in the jig 12 falls down and slides along the jig 12 to a point where it is placed in a desired position and in a desired location in relation to the robot 5. The mutual position between the robot 5 and the jig 12 must be precisely known. In this case, the lower edge of the sheet 7 is also rectangular. The skew side stopper 12a and the lower stopper 12b of the jig 12 are also placed in a slanted position so that the sheet 7 would slide downwards on fingers 12c. The robot 5 comprises gripping means 13, normally suction pads, for moving the sheet 7. Other alternatives include an electromagnet and a finger gripper. The construction of the robot 5 is known as such, and it comprises the necessary number of arms linked to each other via joints, so that the desired programmed movements could be performed. The robot 5 can also be replaced with a manipulator apparatus which is controlled to move in a corresponding manner and is capable of performing the presented functions. By means of the jig 12, the location of the sheet 7 is now known, so the robot knows the exact position and location of the sheet to grip. At the same time, it knows how to turn the means 13 to a desired position for the gripping. In this way, the robot 5 knows how to bring the sheet 7 to the pressing machine 6 in a correct manner and how to place the sheet to the desired location as precisely as possible. The pressing machine 6 is normally provided with one or more rear stoppers, against which the sheet 7 is placed, simultaneously activating a sensor to indicate that the sheet 7 is in its position and the pressing machine 6 can start the work stages.

The manufacturing cell operates in such a way that the robot 5 moves to the pallet 8 and selects from the pallet 8 a sheet 7 which is transferred to the jig 12. After or during the centering of the sheet 7, the robot 5 moves to the pressing machine 6 and places the sheet 7 between the jaws of the pressing machine 6. After the pressing, the robot 5 moves to the pallet 9 and places the bent sheet 7 onto the same. Possibly, the robot 5 holds the sheet 7 during the bending. After this, the robot 5 moves to the pallet 8 again or, if necessary, to the pallet 14, if it also carries sheets.

According to another embodiment of the invention, the transfer device 1 comprises two carriages 2, the jig 12 of Fig. 2 being placed onto one of them. In Fig. 1, this carriage is delineated with a broken line 15. The movements or positions of the carriages 2 and 15 are synchronized in such a way that the robot 5 does not need to make extra movements in the X-direction when the sheet 7 needs to be placed in the jig 12. During the use of the jig 12, the carriage 15 is always in a determined location or at a determined distance from the robot 5. This distance is preferably always constant, even during a movement.

One efficient system is achieved by placing two or more jigs 12 in the arm 16, as shown in Fig. 2, wherein the sheets 7 do not need to be fetched one by one. In this way, for each additional jig 12, the time is saved which is taken by the movements of the robot 5 from the pressing machine 6 to the pallet 9, therefrom to the pallet 8, and further back to the pressing machine 6. The bent sheet 7 is returned to the first jig 12, and the sheet in the second jig is bent after that. The last bent sheet does not need to be returned to the second jig, but it can be brought directly to the pallet 9. The first jig 12 is thus simultaneously an intermediate storage, which is used in the transfer from the pressing machine 6 to the pallet 9.

According to the principle of Fig. 3, the jig 12 is also provided with sensor means 17 to examine if two or more sheets 7 are adhered to each other. The checking is necessary to avoid an attempt to bend two sheets simultaneously. The second sheet may be adhered to the lower surface of the sheet 7 when its upper surface is gripped by the robot 5. The cause for the adherence may be, for example, moisture or liquid between the sheets. In this case, for example a hammer-type piston 18, a spike or other means of prior art is used, and, if necessary, also a separate stopper, between which the sheet 7 is left. If necessary, also the finger 12c or a corresponding point in the jig 12 can be used as the stopper. On the basis of the distance between the piston and the stopper, it is possible to determine the number of sheets, and the sheets can be removed. Also other sensors according to prior art can be used. The means 17 are implemented, for example, by means of a cylinder actuator, known as such, provided with a linear sensor to determine the length of the stroke of the piston. For example, a measuring signal from the sensor is compared with the measuring signal obtained in the case of one sheet 7. The sensor means are connected, for example, to the stopper 12a or 12b. The sensor means generate, for example, an output signal 19, on the basis of which the thickness of the stack of sheets and thereby also the number of sheets 7 can be determined. For the processing, the sensor signal 19 is led, for example, to the control 10 of the robot, and the robot 5 is instructed to bring the sheets 7 to a given location or to perform other given operations. The sensor means 17 may also comprise a separate control system which processes the data obtained from the sensor and gives the control 10 and/or the control means 11 an alarm signal that there are several or no sheets 7.

Preferably, the checking is performed simultaneously with normal movements when the sheet 7 is brought and delivered to the jig 12, or when it is transferred in the jig 12, or when the sheet 7 has been placed in its position, or when it is removed from the jig 12. The principle is that the checking does not cause delays in the work cycle, wherein the checking should not require extra movements of the robot 5 or cause unnecessary waiting. Preferably, the checking takes place when the sheet 7 is centered and at rest. The robot is thus moving towards the sheet 7 or is almost ready to pick up the sheet 7. In Fig. 3, the jig 12 is shown in an embodiment in which it can be placed either onto the support of the arm 16 of Fig. 2 or directly onto the floor, wherein the jig 12 does not move.

In one embodiment, the sensor means 17 are placed in the gripper 13 of the robot 5, wherein it is possible to apply particularly the above-mentioned jaw-type means. In the case of metal sheets 7, it is also possible to apply magnetic fields in the detection. In the case of detecting the quantity of sheets 7 on the pallet 9, or the number of sheets 7 in the gripper 13, the detection can be performed simultaneously when the robot 5 is moving to the jig 12. If the alarm signal is available before the sheet 7 is placed in the jig 12, time is saved, and the sheet 7 can be returned faster to a given storage location, for example to the pallet 14.

The combination of the jig 12 and the sensor means 17 can also be used to accelerate the operations in the case that the jig 12 is installed in a stationary location, for example on the floor. In this case, the delays caused by the checking can also be reduced in connection with such robots 5 which do not move. Nevertheless, the jig 12 can be connected to the robot 5, which is installed in a stationary position, as shown in Fig. 2, or to its stationary frame. At the same time, the advantage is achieved that the position of the jig 12 does not need to be verified by measurements or other operations, because the connecting means or the arm 16 determine the location of the jig 12 precisely in relation to the robot 5.

The invention can also be applied in connection with other manufacturing cells for manipulating, for example by pressing, bending, forming, cutting, punching or in another way, various sheets or work pieces, which are suitable for being manipulated by a robot and require centering in a desired position. Alternatively, the apparatuses may comprise, for example, a drilling device for machining the work piece in a desired manner.

The installation, which comprises the robot, *i.e.* the automated manipulating means 5, the carriage 2 with its rails 3 and 4, *i.e.* the transfer means, and the positioning means 12, is also useful in various transfers of other work pieces, when also the time that goes for the transfers and the centering of the work piece is to be optimized. It is thus possible to use, for example, a device which receives the work piece, grips it, centers it and then places the work piece precisely in a desired position, for example on a pallet. In the case of Fig. 1, the robot 5 can thus merely transfer sheets 7 from the pallet 8 to the pallet 9. The work piece is thus in a given position and location for the next work stage, wherein the next device or robot can grip it at a correct point. The operation of such a type often involves the requirement that the robot must move along a given path, wherein advantages are achieved by reducing the number of stops and by combining functions.

Alternatively, the manipulating means 5 comprise a mechanized device, which may be constructed for one purpose only and which consists of a set of actuators and a control for timing their operation. A robot, in turn, is more versatile and it can be quickly and easily reprogrammed for variable functions, if necessary.

In the above-presented description, the invention has been illustrated by means of some examples, but the invention can also be applied within the scope of the appended claims.

## Claims

1. A manufacturing cell for work pieces, comprising:
- a device (6) for machining a work piece (7),
- one or more storage locations (8) for fetching a work piece,
- one or more storage locations (9) for returning the work piece,
- automated manipulating means (5) for transfers of the work piece, which are arranged to grip the work piece (7), to place the work piece (7) in the machining device (6) and to deliver the machined work piece (7),
- transfer means (2), which are arranged to transfer said manipulating means to and from said storage locations and said machining device, and
- positioning means (12), wherein said manipulating means are arranged to deliver the work piece (7) to said positioning means for setting the position of the work piece (7) and for gripping it again after the setting,
**characterized in that** the positioning means (12) are, together with the manipulating means (5), placed in said transfer means, or the positioning means (12) are placed in separate transfer means (15), which are arranged to move said positioning means within the reach of the manipulating means (5) at least for the time of said setting.

2. The manufacturing cell according to claim 1, **characterized in that** there are two or more positioning means (12) of the same type.

3. The manufacturing cell according to claim 1 or 2, **characterized in that** separate transfer means (15) are arranged to move the positioning means (12) to a predetermined constant distance in relation to the manipulating means (5), if necessary, also during that transfer movement of the manipulating means (5) which takes place simultaneously with the setting of the position of the work piece (7).

4. The manufacturing cell according to any of the claims 1 to 3, **characterized in that** the machining device (6) comprises an edging press or a press device intended for cutting or forming.

5. The manufacturing cell according to any of the claims 1 to 4, **characterized in that** the storage location (8, 9) is a pallet, a platform or a conveyor, on which the work pieces (7) are placed, wherein the work pieces are, for example, sheets or bent work pieces.

6. The manufacturing cell according to any of the claims 1 to 5, **characterized in that** the manipulating means (5) comprise a programmable robot.

7. The manufacturing cell according to any of the claims 1 to 6, **characterized in that** the transfer means (1) comprise a rail (3, 4) and a carriage (2) moving back and forth along the rail, the manipulating means (5) or the positioning means (12) or both of them being placed on the carriage (2).

8. The manufacturing cell according to any of the claims 1 to 7, **characterized in that** the positioning means (12) comprise a support, along which the work piece (7) is arranged to slide by the effect of gravity and to be placed in a desired position and location.

9. The manufacturing cell according to claim 8, **characterized in that** the positioning means (12) also comprise sensor means (17), which are arranged to detect the adherence of several work pieces (7) to each other.

10. The manufacturing cell according to any of the claims 1 to 8, **characterized in that** the manipulating means (5) comprise means (13) for gripping work pieces, wherein they also comprise sensor means (17), which are arranged to detect the adherence of several work pieces (7) to each other.

11. The manufacturing cell according to any of the claims 1 to 10, **characterized in that** it also comprises sensor means (17), which are arranged to detect the adherence of several work pieces (7) to each other by detecting the number of work pieces (7) left in the storage location (8) after the manipulating means (5) have removed the work piece, to compare said number with the previous number.

12. A transfer and manipulating apparatus for work pieces, comprising:
- automated manipulating means (5) for transfers of a work piece, which are arranged to grip the work piece (7) and to deliver the work piece (7) again,
- transfer means (2), which are arranged to transfer said manipulating means along a given path (3, 4), for transferring work pieces (7) to different locations (6, 9), and
- positioning means (12), wherein said manipulating means are arranged to deliver the work piece (7) to said positioning means for setting the position of the work piece (7) and for gripping it again after the setting,
**characterized in that** the positioning means (12) are, together with the manipulating means (5), placed in said transfer means, or the positioning means (12) are placed in separate transfer means (15), which are arranged to move said positioning means within the reach of the manipulating means (5) at least for the time of said setting.

13. The transfer and manipulating apparatus according to claim 12, **characterized in that** there are two or more positioning means (12) of the same type.

14. The transfer and manipulating apparatus according to claim 12 or 13, **characterized in that** separate transfer means (15) are arranged to move the positioning means (12) to a predetermined constant distance in relation to the manipulating means (5), if necessary, also during that transfer movement of the manipulating means (5) which takes place simultaneously with the setting of the position of the work piece (7).

15. The transfer and manipulating apparatus according to any of the claims 12 to 14, **characterized in that** the positioning means (12) also comprise sensor means (17), which are arranged to detect the adherence of several work pieces (7) to each other.

16. A positioning device for work pieces, which is arranged to center a work piece (7) in a given position and in a given location, when the work piece (7) is placed in said device for positioning, **characterized in that** the positioning device (12) is also equipped with sensor means (17), which are arranged to detect the adherence of several work pieces (7) to each other, one upon the other, and whose operation is possible simultaneously with either the arrival, the centering, the immobility, or exit of the work piece (7), wherein it is possible to avoid time delays caused by the detection in the work cycle.

17. The positioning device according to claim 16, **characterized in that** it comprises guides (12a, 12b, 12c), along which the work piece (7) is arranged to slide freely by the effect of gravity and to be guided to a given location and to a given position.

18. The positioning device according to claim 16 or 17, **characterized in that** said sensor means comprise a means (18) which can be transferred against the work piece (7) and which reaches a position, which can be used to determine, if there are one or more work pieces (7).

19. The positioning means according to claim 16 or 17, **characterized in that** said sensor means comprise optical means which are arranged to detect the side surfaces of work pieces (7) placed next to each other, and if there are several work pieces (7) placed in parallel.

20. The positioning device according to any of the claims 16 to 19, **characterized in that** it is placed in a stationary position, or fixed to transfer means (1) which are arranged to move said positioning device along a desired path, or fixed in automated manipulating means (5) which are arranged to deliver a work piece (7) to said positioning device or to remove said work piece.
